(19) Europäisches Patentamt / European Patent Office / Office européen des brevets

(11) **EP 3 340 167 A1**

(12) **EUROPEAN PATENT APPLICATION**

(43) Date of publication:
**27.06.2018 Bulletin 2018/26**

(51) Int Cl.:
*G06T 5/00* (2006.01)  *G06F 3/14* (2006.01)

(21) Application number: **16306777.0**

(22) Date of filing: **22.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **THIEBAUD, Sylvain**
**35576 Cesson-Sévigné (FR)**
• **THEBAULT, Cedric**
**35576 Cesson-Sévigné (FR)**
• **POULI, Tania**
**35576 Cesson-Sévigné (FR)**

(74) Representative: **Browaeys, Jean-Philippe**
**TECHNICOLOR**
**1-5, rue Jeanne d'Arc**
**92130 Issy-les-Moulineaux (FR)**

(54) **DISPLAYING METHOD FOR DISPLAYING AN IMAGE ON A FIRST DISPLAY DEVICE AND AT LEAST A PORTION OF THE SAME IMAGE ON A SECOND DISPLAY DEVICE**

(57) This method comprises:
- first tone mapping an original version (VO) of the image and using the first tone-mapped version (V1) to display the image on the first display device,
- selecting a portion of said image,
- second tone mapping the original version (VO) of said selected portion and using said second tone-mapped version (V2, V'2) to display the selected portion of image on the second display device,
wherein the second tone mapping is different and complementary with the first tone mapping.

Fig.5

**Description**

Technical Field

The invention relates to the simultaneous display on at least one display device of the same image content (or its portion) but with different tone processing, using notably different tone-mapping or inverse-tone-mapping operators.

Backaround Art

It is common to represent colors of pixels of an image through different color channels, including notably a luminance channel. The different luminance values of these colors are distributed over a luminance range that depends on the specific content of the image.

It is well known to adapt the colors of pixels of an image to the luminance dynamic range of a display device. For instance, if the display device has HDR capabilities, for instance a peak white of 1000 nits, and if the content to display, namely the image, is provided under LDR format, it is known to inverse tone-map this content, i.e. to transform LDR colors representing the image into HDR colors and to use these HDR colors to display the image on the HDR display device. Reversely, if the display device has LDR capabilities, for instance a peak white of 100 nits, and if the content to display, namely the image, is provided under HDR format, it is known to tone-map this content, i.e. to transform HDR colors representing the image into LDR colors and to use these LDR colors to display the image on the LDR display device. Tone mapping and inverse tone mapping algorithms are among the well-known methods of image processing.

US2014232614 aims at providing a viewer the same color perception of colors of an image when it is displayed on two different display devices. This document discloses a method for perceptually synchronizing a second display device that is in a same visual environment as a first display device. The synchronization may be affected by dynamically adjusting the image data rendered upon one of the first and second display devices, for instance in accordance with the characteristics of these display devices. According to this document, such adjustments may be made to the **dynamic range,** color mapping, etc. of the rendering on the first and second display device. It means that the settings of these display devices are adapted to get the same color rendering of an image on both display devices. It means that, even if the first and second display devices have different dynamic range capabilities (and/or color gamut), the rendering of an image will be perceptually similar in both display devices.

US2015/279327 discloses displaying an image on a first display device having a first display pixel density and a first display dimension and discloses displaying a portion of this image on a second display device having a second display pixel density higher than the first display pixel density and a second display dimension less than the first display dimension. The first display device sends the image to the second display device to display a portion of the image in the second display pixel density and sends a spatial orientation determined between the first display device with the second display device. The portion of the image is defined by this spatial orientation.

Summary of invention

Contrary to objects of prior art documents US2014232614 and US2015/279327 as described above, an object of the invention is to provide simultaneously a viewer different and **complementary** tone perceptions of an image.

For this purpose, the subject of the invention is a displaying method for displaying an image on a first display device having a first dynamic range and at least a portion of the same image on a second display device having a second dynamic range, comprising:

- first tone mapping an original version of said image over the first range of luminance of the first display device according to a first tone mapping function $T_{full}$ resulting in a first tone-mapped version of said image and using said first tone-mapped version to display said image on said first display device,
- selecting a portion of said image,
- second tone mapping the original version of said selected portion of image over the second range of luminance of the second display device according to a second tone mapping function resulting in a second tone-mapped version of the selected portion of image and using said second tone-mapped version to display the selected portion of image on said second display device,

wherein the second tone mapping function is different from the first tone mapping function.

In brief, this displaying method comprises:

- first tone mapping an original version of the image and using the first tone-mapped version to display the image on the first display device,

- selecting a portion of said image,
- second tone mapping the original version of said selected portion and using said second tone-mapped version to display the selected portion of image on the second display device,

wherein the second tone mapping is different and complementary with the first tone mapping.

Preferably, said first tone mapping function is nonlinear and said second tone mapping functionis based on a third piecewise linear tone mapping functiondefined such that luminance values closed to a weighted average luminance of the image are less tone-mapped than luminance values further away than this weighted average luminance.

Preferably, said second tone mapping function is based on a weighted combination of the first tone mapping function with said third tone mapping function, wherein the weight of this combination is defined according to the relative position of the pixel to tone map in connection with the position of the center of the selected portion such that the closer is this position to this center, the higher is the weight.

Preferably, said first tone mapping function is designed to provide a good tradeoff between dynamic range adaptation and contrast preservation over all pixels of the image.

Preferably, said first tone mapping function corresponds to the application of a tone-mapping exponent containing low frequency information of said image.

Preferably, said first tone mapping function and said second tone mapping function are defined such that said second tone-mapping function provides less luminance compression than the first tone-mapping mapping.

Preferably, said selection of a portion of image is performed in an area of the image where there are losses of details due to said first tone mapping.

A subject of the invention is also a displaying system for displaying an image, comprising:

- a first display device having a first dynamic range,
- a second display device having a second dynamic range,
- means for selecting a portion of said image, and
- an image processing device comprising at least one processor configured for implementing the above displaying method.

Brief description of drawings

The invention will be more clearly understood on reading the description which follows, given by way of non-limiting example and with reference to the appended figures in which:

- Figure 1 illustrates a scene with a viewer having in his field of view a first display device displaying the full image under a LDR version V1 and a second display device displaying a selected portion of image under a LDR version V2, according to the main embodiment illustrated on figure 5.
- Figure 2 shows luminance histograms of luminance values of a HDR version V0 of the image, of tone-mapped luminance values of the LDR versions V1, V2 and V'2,
- Figure 3 illustrates a scene with a viewer having in his field of view a TV set displaying the full image under the LDR version V1 and a tablet displaying a selected portion of image under the LDR version V2, according to the main embodiment illustrated on figure 5,
- Figure 4 illustrates luminance compression exponent values that are used to implement a detailed embodiment of the first step of the main embodiment illustrated on figure 5,
- Figure 5 is a diagram illustrating the first to fourth steps of a main embodiment of the invention.
- Figure 6 illustrates a piecewise linear tone mapping function that is used to implement a detailed embodiment of the third step of the main embodiment illustrated on figure 5,

Description of embodiments

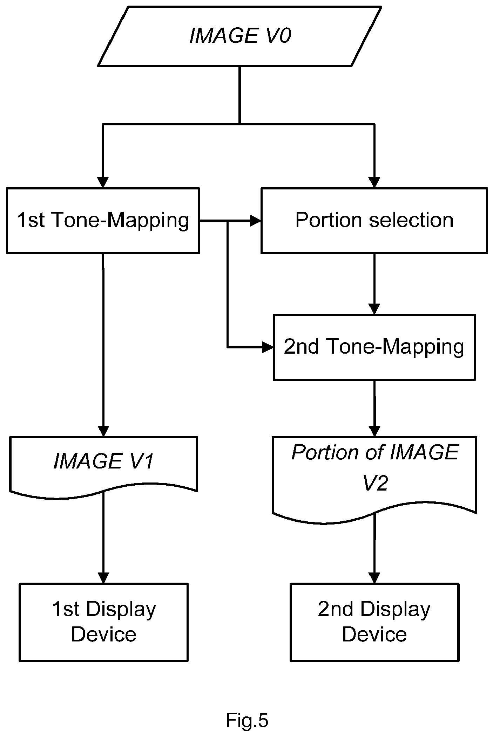

It will be appreciated by those skilled in the art that the **block diagram of figure 5,** represent conceptual views of illustrative circuitry embodying the invention. Some steps illustrated on this figure may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software.

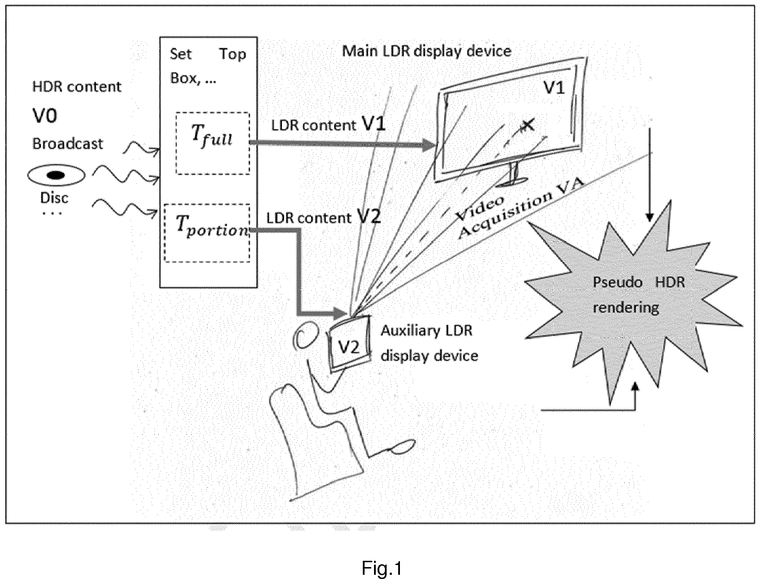

In reference to figure 1, a **main embodiment** of the displaying method will now be described in the context of displaying for a viewer an image content provided under a HDR version V0 through, for instance, a set-top-box or a Blue-Ray player playing a Blue-Ray optical disc. Each color channel of this HDR version V0 is for instance coded under 10 bits (1024 digital values).

In this main embodiment, a first LDR display device having a first range of luminance, here LDR, is used to display this content or a portion of it to provide the viewer with a first tone perception of this content and a second main LDR display device having a second range of luminance, here LDR too, is used to display the same content or a portion of it to provide the viewer with a second different and complementary tone perception. The first and second ranges of luminance may be different one from another or may be the same. In this embodiment, each color channel of the LDR versions V1 and V2 of the content are for instance coded under 8 bits (256 digital values).

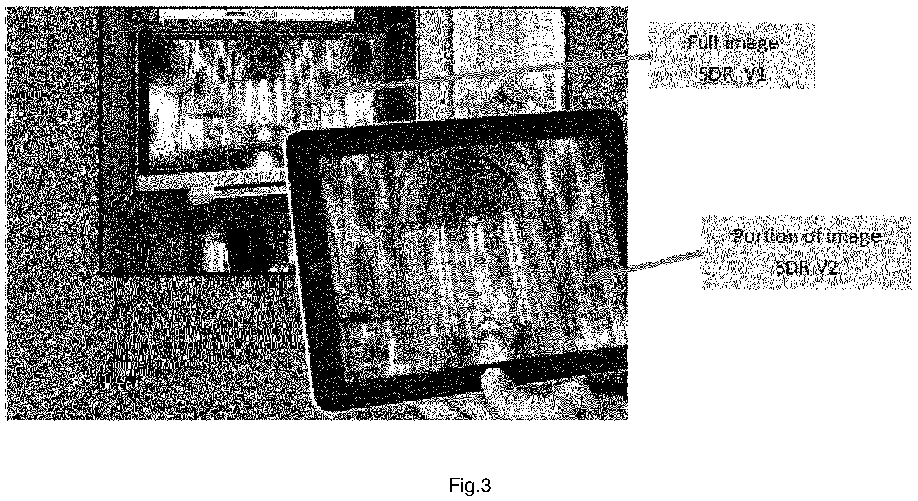

In this main embodiment, the first display device is for instance a TV set (as shown on figure 3). Alternatively, it may be a monitor, or any other type of display device. The second display device is for instance a tablet (as shown on figure 3). Alternatively, it may be a monitor too or any other type of display device. The first display device is connected to the set-top-box or DVD player through, for instance, a LAN or HDMI cable. The second display device is connected to the set-top-box or DVD player through, for instance, a Wi-Fi network.

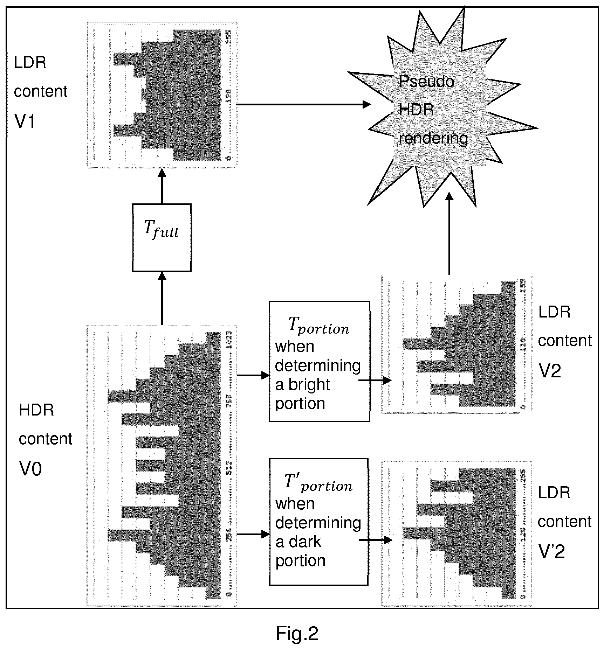

In a **first step** of this displaying method, a first tone mapping function $T_{full}$ is designed such as to distribute luminance values of **all** pixels of the image over the first range of luminance of the first display device and such as to provide a good tradeoff between dynamic range adaptation and contrast preservation over all pixels of the image. Then, this first tone mapping function $T_{full}$ is applied to luminance values of the HDR version of the image, resulting in first tone mapped luminance values forming a first LDR version V1 for the image: see figure 1. Several non-limiting embodiments of definition of this first tone mapping function $T_{full}$ are given below, that are based on an exponential compression function, with an exponent resulting from a low-pass filtering of the luminance. Under the caption "LDR content V1 ", figure 2 shows a histogram of the tone-mapped luminance values of this LDR version V1 over a low range of 256 different segments for all pixels of the image.

In a second **step** of this displaying method, at least a portion of the image is selected. Preferably, the selection is performed in an area of the image where there are loss of details in the first LDR version V1, due to the design of the first tone mapping function $T_{full}$.

Such a selection can be performed by the viewer by positioning a window of width M' and height N' in the full image as displayed on the first display device.

When the second display device is a tablet, the viewer may use the camera of this tablet to aim at a center p of an area of loss of details in the full image displayed on the first display device. The position of this center p inside the full image which the camera of the tablet aims at is determined in a manner known per se, using for instance infrared transmitter/sensor, image analysis means, gyroscopic sensors included in the tablet. A window around this center p then determines the selected portion of the image to be displayed on the tablet, corresponding to pixels in the intervals $|p_x-M'/2, p_x+M'/2|$, $|py-N'/2, py+N'/2|$, where $p_x$ is the x coordinate of the center p in the image, where $p_y$ is the y coordinate of this center p. Any other known way to determine a center p of a portion of image can be used instead.

Preferably, the viewer selects a bright portion and/or a dark portion of the image.

In a **third step** of the displaying method, a second tone mapping function $T_{portion}$ is designed such as to obtain a second distribution of luminance values of pixels of the selected bright portion of the image over the second range of luminance of the second display device, wherein this second distribution is different from a first distribution of the first tone mapped luminance values of the same pixels over the first range of luminance of the first display device. Then, this second tone mapping function $T_{portion}$ is applied to the luminance values of the HDR version V0 of the selected bright portion of the image, resulting in second tone mapped luminance values forming a second LDR version V2 of the selected bright portion of the image: see figure 1. Several non-limiting embodiments of definition of this second tone mapping function $T_{portion}$ are given below. Under the caption "LDR content V2", figure 2 shows a histogram of the tone-mapped luminance values of this LDR version V2 over a low range of 256 different segments for all pixels of the bright portion of the image. Under the caption "LDR content V'1 ", figure 2 shows a histogram of other tone-mapped luminance values of another LDR version V'2 over a low range of 256 different segments obtained similarly for all pixels of the dark portion of the image.

In a **fourth step** of the displaying method applied to this image:

- the first LDR version V1 is sent to the first display device such as to display the image on this first display device; and
- the second LDR version V2 is sent to the second display device such as to display the selected bright portion of the image on this second display device; alternatively or in complement, the other second LDR version V'2 is sent to the second display device such as to display the selected dark portion of the image on this second display device.

Figure 3 illustrates the displaying that is obtained on both display devices.

As the second tone mapping function $T_{portion}$ or $T'_{portion}$ is different from the first tone mapping function $T_{full}$, colors used to display at least a portion of the image on the second display device are different from those that are used to display the same portion (even if it is the whole image) on the first display device, therefore providing simultaneously the viewer with different tone perceptions of the same portion of the image. The same effect is obtained even if the "at least a portion" is the whole image.

The same effect can be obtained on a single display device when its screen is divided into two parts, one part to display an image which is tone mapped according to the first tone mapping function $T_{full}$, and another part to display at least a portion of this image which is tone mapped according to second tone mapping function $T_{portion}$.

This embodiment may be implemented not only in the context of figure 1 and 3 of displaying for one viewer both an image on a TV set and at least a portion of this image on the viewer's tablet, but for instance also in the context of displaying for a plurality of viewers both this image on this TV set (or on the screen of a projection display device) and different portions of this image on each viewer's tablet, where, notably, the portion of image displayed on each tablet differs from one tablet to another one.

Advantageously, due to the first tone-mapping $T_{full}$, some details of the image will be lost if displayed on the first display device but may be kept when displayed on the second display device, notably if the second tone-mapping $T_{portion}$ and/or $T'_{portion}$ provides less luminance compression than the first tone-mapping $T_{full}$.

While LDR version V1 is obtained by a tradeoff in order to be able to display the whole dynamic range of HDR version V0 on the first LDR main display device, the LDR version V2 and/or V'2 are processed to preserve the local contrast and the details (around the center p defining the portion of the image within the full image, defined in second step of the embodiment) available in HDR version V0. When both display devices are located in the visual field of the viewer as shown for instance on figure 1, the simultaneous rendering of the full image on the first LDR display device and of potentially all the details on the second auxiliary LDR display device provide advantageously the viewer a pseudo HDR rendering.

Although each display device separately provides a LDR rendering, the full image tone mapping $T_{full}$, implying a tradeoff and a loss of details, associated with the local tone mapping $T_{portion}$ and/or $T'_{portion}$ preserving locally the details, provides the viewer a better representation of the contrast, luminance, color and detail information available in the original HDR version V0 of the content. This association may be perceived as pseudo HDR.

The first and third steps above may be implemented in any image processing module configured to implement these steps. This image processing module can be incorporated in the set-top-box, in the first display device (notably when implementing the first step) and/or in the second display device (notably when implementing the third step). This image processing module can be incorporated in an image processing device independent of the display devices, as soon as it is connected to these display devices such as to be able to send to these display devices the mapped luminances.

A more detailed non-limiting embodiment of the **first step** above will now be given below over six sub-steps 1.1 to 1.6, incorporating a non-limiting definition of the first tone mapping function $T_{full}$ such as to provide a good tradeoff between dynamic range compression and contrast preservation over all pixels of the image. In this example, this definition is based on the application of a luminance compression exponent to the luminance values of the HDR version V0 of the image, resulting in first tone mapped luminance values $Y_{full}$ or $Y'_{full}$. Any other known tone mapping function could be used instead.

1.1 **RGB to Luminance:** a luminance channel $Y$ is computed from the RGB values representing colors of pixels of the image in its HDR version V0, using any known RGB -> Luminance conversion method ; the luminance values $Y$ are then normalized between 0 and 1.

1.2 **Base/Detail Decomposition:** luminance values $Y$ are decomposed into a base layer $Y_{base}$ containing low frequency information and an optional detail layer $Y_{detail}$ containing high frequency information. That can be obtained using any low-pass filter as for instance a low-pass Gaussian filter $f_{gaussian}$ of radius $r$ such that:

$$Y_{base} = f_{gaussian}(Y),$$

$$Y_{detail} = 2(Y - Y_{base} + 0.5)$$

Optionally, an ellipsoid Gaussian filter could be used instead of a circular one. Other different filtering methods may be used in this step as well, to achieve a different final 'look and feel', such as for example the bilateral filter.

1.3 **Compression exponent map calculation:** In this sub-step, a per-pixel map is computed, defining a luminance compression exponent for each pixel in the image. Since the rendering of the image on the first display device provides in this embodiment an overall view of the image, it is important that the luminance compression exponent map provides a good tradeoff between dynamic range compression and contrast preservation over all pixels of the image. The following calculation may be used for example to compute the luminance compression exponent map $C_{full}$ :

$$C_{full}(i) = \begin{cases} \dfrac{1 - Y_{base}(i)}{2} & \text{if } Y_{base}(i) \leq \kappa_1 \\[2mm] \dfrac{1}{3} & \text{if } \kappa_1 < Y_{base}(i) \leq \kappa_2 \\[2mm] \dfrac{2}{3} - \dfrac{Y_{base}(i)}{2} & \text{otherwise} \end{cases}$$

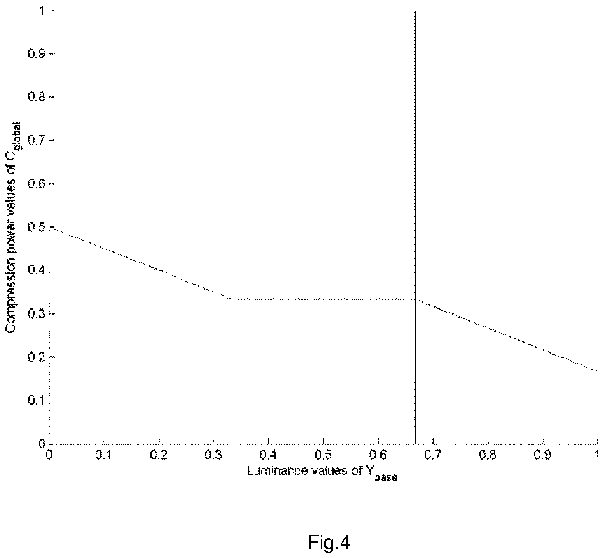

Figure 4 illustrates luminance compression exponent values that are then obtained for normalized luminance input values between 0 and 1.

**1.4 Definition of the first tone mapping function** $T_{full}$ and **its application** to luminance values of HDR version V0 to provide the LDR version V2: Using values of the luminance compression exponent map $C_{full}$ as exponents applied to the luminance values $Y$ obtained from sub-step 1.1 above, first tone mapped luminance values $Y_{full}$ of the LCR version V1 are then obtained according to:

$$Y_{full} = Y^{C_{full}}$$

**1.5 Variant of definition incorporating detail enhancement:** in this optional sub-step, details of the image may be enhanced using a detail map $Y_{detail}$ computed as shown in step 1.2 above. In this situation, first tone mapped luminance values $Y'_{full}$ are obtained according to:

$$Y'_{full} = Y_{full} * (d * (Y_{detail} - 1) + 1),$$

where d is a parameter controlling the detail strength, e.g. d = 0.5.

**1.6 Luminance to RGB conversion:** finally, to compute the final first tone mapped image V1 for the first display device, a conversion sub-step, inverse of the conversion of sub-step 1.1 above, takes place for each color channel $R_{full}$, $G_{full}$ and $B_{full}$.

For the red channel, we have for instance $R_{full} = \dfrac{Y_{full}}{Y} R,$ where $R$ is the input red channel.
A similar conversion formula is applied to get the two other color channels $G_{full}$ and $B_{full}$. This sub-step 1.6 completes the computation of the first tone mapping, resulting in the LDR version V2 of the image.

A more detailed non-limiting embodiment of the **third step** above will now be given below over five sub-steps 3.1 to 3.5, incorporating a non-limiting definition of the second tone mapping function $T_{portion}$ such as to maximizes visibility of local details in the selected portion of the image, without necessarily preserving global image contrast as the first tone mapping function $T_{full}$. This definition will also provide a tone mapping function $T_{portion}$ different from the first tone mapping function $T_{full}$. This definition will also be based on the color content of the portion of image selected in step 2 above. Preferably, the definition of this second tone mapping function $T_{portion}$ is based, for instance as described below, on a linear compression, with different compression factors for different luminance segments, where the darker and brighter luminance segments correspond to the more compressive parts of this linear compression function.
Preferably, this definition is based on a weighted combination of the first tone mapping function $T_{full}$ with a third tone mapping function $T_{local}$ which is defined as depending on the color content of the portion of image selected in step 1 above, wherein this weight is defined according to the relative position of the pixel to tone map in connection with the position of the center of the selected portion (see step 3.1 below). The application of this second tone mapping function $T_{portion}$ to luminance values of the HDR version V0 of the image results in second tone mapped luminance values $Y_{portion}$ forming an LDR version V2 or V'2.

**3.1 Weight Map Calculation:** Before computing the second tone mapped luminance values for the selected portion of image to be displayed on the second display device, a weight map is computed such that the closer is a position of a pixel x,y of this map to the center $p$ of the selected portion of the image, the higher is this weight. This weight map is computed for instance as follows for each pixel of the image having position x,y, based on the position of the center $p$ of the portion of image as determined through step 2 above:

$$W_{portion}(x, y) = (1 - q) * \exp\left(-\frac{[(x - p_x)^2 + (y - p_y)^2]}{r^2}\right)$$

where $p_x$ is the x coordinate of center $p$ in the image, $p_y$ the y coordinate of this center $p$ and $r$ is the radius of the low-pass Gaussian filter $f_{gaussian}$ used in sub-step 1.2 above. This radius $r$ can be set for example to a value of = 0.005 x D,
where D is the maximum between the image width M and image height N in pixels, and
where q is a scalar weight defining how much the second tone mapping function $T_{portion}$ will optimize the rendering of the selected portion of the image on the second display device, potentially compromising the appearance of colors.

### 3.2 Definition of a third tone mapping function $T_{local}$ depending on the color content of the selected portion of image:

The third tone mapping function $T_{local}$ is defined such that luminance values closed to a weighted average luminance of the image are less tone-mapped than luminance values further away than this weighted average luminance, i.e. corresponding to bright or dark portions of the image.

Therefore, a **weighted average luminance value $L_{portion}$** is computed from the luminance values $Y$ of the HDR version V0 for instance as follows:

$$L_{portion} = \frac{\sum_{x,y \in M', N'} \left(W_{portion}(x, y) * Y(x, y)\right)}{\sum_{x,y \in M', N'} \left(W_{portion}(x, y)\right)}$$

where M' is the width (in pixels) of the selected portion of image and N' the height (in pixels) of this selected portion. It means that, for computing this weighted average luminance, only pixels in the intervals $|p_x$-M'/2, $|p_x$+M'/2|, $|p_y$-N'/2, $p_y$+N'/2| are considered.

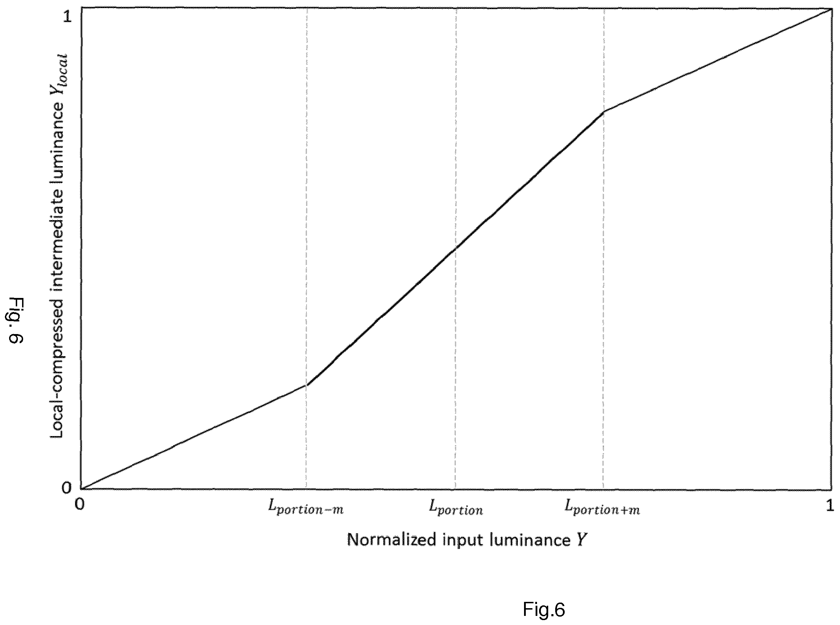

The third tone mapping function $T_{local}$ may be then defined as a piecewise linear function of the luminance, comprising a central luminance segment corresponding to luminance values around the weighted average luminance $L_{portion}$ and at least a dark luminance segment corresponding to luminance values lower than the weighted average luminance $L_{portion}$, and a bright luminance segment corresponding to luminance values higher than the weighted average luminance $L_{portion}$, as illustrated on figure 6. Such a function $T_{local}$ may be defined as follows for a pixel at location $x, y$:

$$Y_{local}(x, y) = \begin{cases} \dfrac{Y(x, y) * C_L}{n}, & Y(x, y) < L_{portion} - m \\ \dfrac{Y(x, y) * C_M + d_1}{n}, & L_{portion} - m \geq Y(x, y) > L_{portion} + m \\ \dfrac{Y(x, y) * C_H + d_2}{n}, & Y(x, y) \geq L_{portion} + m \end{cases}$$

wherein the central compression factor $C_M$ controls the compression of the central luminance segment,
wherein the dark and bright compression factors $C_L$ and $C_H$ controls the compression of, respectively, the dark and bright luminance segments, are both given between 0 and 1, and are chosen according to $C_M \geq C_L$, $C_H$, i.e. such that the dark and bright luminance segments correspond to the more compressive parts of the piecewise linear function,
wherein the parameter $m$ defines the range of luminance values around $L$_portion that are considered as belonging to the central segment of the piecewise linear function,
wherein the displacement values $d_1$ and $d_2$ ensure that no discontinuities occur between the different segments of the function and are defined as follows

$$d_1 = \left(L_{portion} - m\right)C_L - \left(L_{portion} - m\right)C_M$$

$$d_2 = \left(L_{portion} + m\right)C_M - \left(L_{portion} + m\right)C_H + d_1$$

and wherein the normalization factor $n$ ensures that the values in $Y_{local}$ are between 0 and 1 and is computed as $n = C_H + d_2$.

Values for the above parameters may be set for example to $C_L$ = 0.5, $C_H$ = 0.5, $C_M$ = 1, $m$ = 0.2.

Optionally, in addition to the weighted average luminance $L_{portion}$, other statistics could be considered such as the standard deviation or the kurtosis of the luminance histogram of the selected portion of image, in order to control the parameters defining a local tone mapping function.

**3.3 Definition of the second tone mapping function** $L_{portion}$ **and its application** to luminance values of HDR version V0 to provide the LDR version V2 : second tone mapped luminance values $Y_{portion}$ are then computed according to :

$$Y_{portion} = \left(1 - W_{portion}\right) * Y_{full} + W_{portion} * Y_{local}$$

**3.4 Variant of definition incorporating detail enhancement:** in this optional sub-step, details of the image may be enhanced using a detail portion map $Y_{portion\text{-}detail}$ computed according to:

$$Y_{portion-detail} = [Y_{detail} - 1] * W_{portion} * s + s$$

where $Y_{detail}$ is the detail map computer in step 1.2 above,
where $s$ is a detail scaling parameter controlling the strength of the details and is generally comprised between 0 and 2,
Such a portion detail map allows to maximize local detail visibility in the area around the center p of the portion of image.

In this situation, second tone mapped luminance values $Y'_{portion}$ are obtained according to:

$$Y'_{portion} = Y_{portion} * Y_{portion-detail}.$$

3.5 **Luminance to RGB conversion:** the same calculation as in step 1.6 above is applied, resulting in the LDR version V1 of the selected portion of image.

The second tone mapping function $T_{portion}$ as defined above combines two renderings: one based on a local tone mapping, namely the third tone mapping function, which optimizes detail visibility in the selected portion of the image, and another one, namely the first tone mapping function, based on a tone mapping designed to preserve the contrast in the image. These two renderings are combined according to a mask assigning a weight to each pixel which is higher for each pixel belonging to the selected portion of the image than for other pixels of the image.

According to the above embodiment of definitions of a first tone mapping function $T_{full}$ which provides a good tradeoff between dynamic range compression and contrast preservation over all pixels of the image and of a different second tone mapping function $T_{portion}$ that maximizes visibility of details in the selected portion of the image, the viewer gets different tone perceptions of the same portion of the image when he views the second and first display device.

In a **variant,** the definition of the first tone mapping function $T_{full}$ may depend on the portion of image that is selected to be displayed on the second display device. Preferably, the first tone mapping function $T_{full}$ can be defined to give more priority to the preservation of contrast in the image at the expense of a loss of details in the selected portion. Such a definition of the first tone mapping function $T_{full}$ will advantageously allow the rest of the image (i.e. pixels out of the selected portion) to span more of the available dynamic range. That will provide a rendering of the full image rendering with more global contrast, which might therefore be more visually pleasing. This variant may notably be implemented in the context of displaying, notably for one viewer only, both a full image (for instance on a TV set) and at least a portion of this image on his tablet.

A **second** non-limiting **embodiment** of definitions of a first tone mapping function $T_{full}$ and of a second tone mapping function $T_{portion}$ (applicable also to $T'_{portion}$) will now be described.

In this second non-limiting embodiment, the first tone mapping function $T_{full}$ depends also on the portions of image that are selected to be displayed on the second display device, as in the variant above. Therefore, this second embodiment may notably be implemented too in the context of displaying, notably for one viewer only, both a full image (for instance on a TV set) and at least a portion of this image on his tablet.

This second embodiment aims at compressing more the luminance range of the pixels corresponding to the selected portion of the image in the LDR version V1 of the full image than the luminance range of the same pixels in the version V2 of the selected portion of the image.

To define the first tone mapping function $T_{full}$ and the second tone mapping function $T_{portion}$, it is proposed to redistribute the luminance levels provided by the HDR version V0 respectively into a full-image redistributed histogram $H_{full\text{-}redistr}$ and into a portion-image redistributed histogram $H_{portion\text{-}redistr}$, and to compute the first tone mapping function $T_{full}$ and the second tone mapping function $T_{portion}$ using any histogram based tone mapping based on the respective redistributed histograms. Such a histogram based tone mapping can be found for instance in the article from Gupta, Shefali, and Yadwinder Kaur, "Review of Different Local and Global Contrast Enhancement Techniques for a Digital Image", International Journal of Computer Applications 100.18 (2014): 18-23.

To build the full-image redistributed histogram $H_{full\text{-}redistr}$, it is for instance proposed, for a pixel at position (x, y) having a given luminance value, instead of adding 1 to the histogram bin corresponding to this luminance value as in the usual building of histograms, it is proposed to add a first weight $W_{Main}(x,y)$ for instance computed according to the following product of two Gaussian filters:

$$W_{Main}(x,y) = 1 - exp\left(-\frac{(x - p_x)^2}{2r_x{}^2} - \frac{(y - p_y)^2}{2r_y{}^2}\right)$$

To build the portion-image redistributed histogram $H_{portion\text{-}redistr}$, it is for instance proposed, for a pixel at position (x,y) having a given luminance value, instead of adding 1 to the histogram bin corresponding to this luminance value as in the usual building of histograms, it is proposed to add a second weight $W_{Aux}(x,y)$ for instance computed according to the following the product of two Gaussian filters:

$$W_{Aux}(x,y) = exp\left(-\frac{(x - p_x)^2}{2r'_x{}^2} - \frac{(y - p_y)^2}{2r'_y{}^2}\right)$$

where $r'_x$ and $r'_y$ may be different from $r_x$ and $r_y$ above.

The above displaying method uses generally at least one **image processing device** using at least one processor configured to implement, at least partly, this method. Such an image processing device can be incorporated in the first and/or second display devices, and/or in another electronic device, such as a TV set; a mobile device; a communication device; a game device; a tablet (or tablet computer) or a smartphone; a laptop; a camera; an encoding chip; a server.

It is to be understood that this method may be implemented in various forms of hardware, software, firmware, special purpose processors, or combinations thereof. This method may be notably implemented as a combination of hardware and software. Moreover, the software may be implemented as an application program tangibly embodied on a program storage unit. The application program may be uploaded to, and executed by, an image processing unit comprising any suitable architecture. Preferably, this unit is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and an image device, such as an image display device or an image capture device.

All embodiments and examples of the present invention are intended to encompass both structural and functional equivalents thereof. Additionally, it is intended that such equivalents include both currently known equivalents as well as equivalents developed in the future, i.e., any elements developed that perform the same function, regardless of structure.

**Claims**

1. A displaying method for displaying an image on a first display device having a first dynamic range and at least a portion of the same image on a second display device having a second dynamic range, comprising:

   - first tone mapping an original version (V0) of said image over the first range of luminance of the first display device according to a first tone mapping function $T_{full}$ resulting in a first tone-mapped version (V1) of said image and using said first tone-mapped version (V1) to display said image on said first display device,
   - selecting a portion of said image,
   - second tone mapping the original version (V0) of said selected portion of image over the second range of luminance of the second display device according to a second tone mapping function $T_{portion}$ resulting in a second tone-mapped version (V2, V'2) of the selected portion of image and using said second tone-mapped version (V2, V'2) to display the selected portion of image on said second display device,

   wherein the second tone mapping function $T_{portion}$ is different from the first tone mapping function $T_{full}$.
   In brief, this displaying method comprises:

   - first tone mapping an original version of the image and using the first tone-mapped version to display the image on the first display device,
   - selecting a portion of said image,
   - second tone mapping the original version of said selected portion and using said second tone-mapped version to display the selected portion of image on the second display device,

   wherein the second tone mapping is different and complementary with the first tone mapping.

2. Displaying method according to claim 1, wherein said first tone mapping function $T_{full}$ is nonlinear and said second tone mapping function $T_{portion}$ is based on a third piecewise linear tone mapping function $T_{local}$ defined such that luminance values closed to a weighted average luminance of the image are less tone-mapped than luminance values further away than this weighted average luminance.

3. Displaying method according to claim 2, wherein said second tone mapping function $T_{portion}$ is based on a weighted combination of the first tone mapping function $T_{full}$ with said third tone mapping function $T_{local}$, wherein the weight of this combination is defined according to the relative position of the pixel to tone map in connection with the position of the center of the selected portion such that the closer is this position to this center, the higher is the weight.

4. Displaying method according to any one of claims 1 to 3, wherein said first tone mapping function $T_{full}$ is designed to provide a good tradeoff between dynamic range adaptation and contrast preservation over all pixels of the image.

5. Displaying method according to any one of claims 1 to 3, wherein said first tone mapping function $T_{full}$ corresponds to the application of a tone-mapping exponent $C_{full}$ containing low frequency information of said image.

6. Displaying method according to any one of claims 1 to 5, wherein said first tone mapping function $T_{full}$ and said second tone mapping function $L_{portion}$ are defined such that said second tone-mapping function $T_{portion}$ provides less luminance compression than the first tone-mapping mapping $T_{full}$.

7. Displaying method according to any one of claims 1 to 6, wherein said selection is performed in an area of the image where there are loss of details due to said first tone mapping.

8. A displaying system for displaying an image, comprising:

   - a first display device having a first dynamic range,
   - a second display device having a second dynamic range,
   - means for selecting a portion of said image, and
   - an image processing device comprising at least one processor configured for implementing the method according to any one of claims 1 to 7.

Fig.1

LDR
content
V1

$T_{full}$

Pseudo
HDR
rendering

HDR
content
V0

$T_{portion}$
when
determining
a bright
portion

LDR
content
V2

$T'_{portion}$
when
determining
a dark
portion

LDR
content
V'2

Fig.2

Fig.3

Fig.4

Fig.5

Fig.6

Fig. 6

Europäisches
Patentamt

European
Patent Office

Office européen
des brevets

# EUROPEAN SEARCH REPORT

Application Number

EP 16 30 6777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/348247 A1 (MCLAUGHLIN GLEN W [US] ET AL) 3 December 2015 (2015-12-03) | 1-4,6,7 | INV.<br>G06T5/00 |
| Y | * the whole document * | 5,8 | G06F3/14 |
| | ----- | | |
| X | US 2005/104900 A1 (TOYAMA KENTARO [US] ET AL) 19 May 2005 (2005-05-19) | 1 | |
| A | * paragraphs [0070] - [0090]; claim 1; figures 4-6 * | 2-8 | |
| | ----- | | |
| X | US 2014/092012 A1 (SESHADRINATHAN KALPANA [US] ET AL) 3 April 2014 (2014-04-03) | 1 | |
| A | * paragraphs [0010] - [0056]; claim 1; figures 1-6 * | 2-8 | |
| | ----- | | |
| Y | US 2015/279002 A1 (CASTELLANI MARZIA E [IT] ET AL) 1 October 2015 (2015-10-01)<br>* abstract * | 8 | |
| | ----- | | |
| Y | US 2012/170843 A1 (LIN PENG [US])<br>5 July 2012 (2012-07-05)<br>* paragraphs [0012] - [0046]; figure 1 * | 5 | |
| | ----- | | |

TECHNICAL FIELDS
SEARCHED (IPC)

G06T
G06F

The present search report has been drawn up for all claims

| Place of search | Date of completion of the search | Examiner |
|---|---|---|
| The Hague | 10 April 2017 | Wozniak, Doris Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6777

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2017

| Patent document cited in search report | | Publication date | Patent family member(s) | | Publication date |
|---|---|---|---|---|---|
| US 2015348247 | A1 | 03-12-2015 | US<br>US<br>WO | 2015348247 A1<br>2017091915 A1<br>2015184300 A1 | 03-12-2015<br>30-03-2017<br>03-12-2015 |
| US 2005104900 | A1 | 19-05-2005 | US<br>US | 2005104900 A1<br>2006158462 A1 | 19-05-2005<br>20-07-2006 |
| US 2014092012 | A1 | 03-04-2014 | NONE | | |
| US 2015279002 | A1 | 01-10-2015 | US<br>US<br>US | 2015279002 A1<br>2015279327 A1<br>2017004599 A1 | 01-10-2015<br>01-10-2015<br>05-01-2017 |
| US 2012170843 | A1 | 05-07-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014232614 A

- US 2015279327 A

**Non-patent literature cited in the description**

- **GUPTA ; SHEFALI ; YADWINDER KAUR.** Review of Different Local and Global Contrast Enhancement Techniques for a Digital Image. *International Journal of Computer Applications,* 2014, vol. 100 (18), 18-23